(19) Europäisches Patentamt
European Patent Office
Office européen des brevets

(11) **EP 2 447 096 A1**

(12) **EUROPÄISCHE PATENTANMELDUNG**

(43) Veröffentlichungstag:
**02.05.2012 Patentblatt 2012/18**

(51) Int Cl.:
**B60H 1/00** (2006.01)    **F25B 30/02** (2006.01)
**F25B 47/02** (2006.01)

(21) Anmeldenummer: **11186865.9**

(22) Anmeldetag: **27.10.2011**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **28.10.2010 DE 102010049871**

(71) Anmelder: **Robert Bosch GmbH**
**70442 Stuttgart (DE)**

(72) Erfinder: **Holtz, Gerald**
**70174 Stuttgart (DE)**

(54) **Wärmepumpeneinrichtung mit Enteisungsfunktion**

(57)    Die Erfindung betrifft eine Wärmepumpeneinrichtung (1) mit einem ersten Verdampfer (11), einem Kondensator (20), einem Kältemittel (21), einer Drossel (30), die derart ausgestaltet ist, dass das Kältemittel (21) in beiden Flussrichtungen expandieren kann, einem Kompressor (22), dessen Rücklauf (101) und Zulauf (102) mit einem ersten 4-Wege-Ventil (51) verbunden sind, wobei die Drossel (30) über Leitungen (100) mit dem ersten 4-Wege-Ventil (51) und dem ersten Verdampfer (11) verbunden ist, und wobei der erste Verdampfer (11) wenigstens über eine Leitung (100) mit dem ersten 4-Wege-Ventil (51) verbunden ist. Aufgabe der Erfindung ist, die Jahresarbeitszahl und die Jahres-Leistungszahl der Wärmepumpeneinrichtung zu erhöhen, sowie eine Vorrichtung bereitzustellen, die erhöhten Komfortansprüchen gerecht wird. Die Lösung soll kostengünstig, zuverlässig und einfach handhabbar sein. Erfindungsgemäß ist vorgesehen, dass der Kondensator (20) zwischen dem Kompressor (22) und dem ersten 4-Wege-Ventil (51) im Rücklauf (101) angeordnet ist, und ein zweiter Verdampfer (12) derart zwischen der Drossel (30) und dem ersten 4-Wege-Ventil (51) angeordnet ist, dass die Drossel (30) zwischen dem ersten Verdampfer (11) und dem zweiten Verdampfer (12) positioniert ist

**Fig. 1**

EP 2 447 096 A1

**Beschreibung**

Die Erfindung betrifft eine Wärmepumpeneinrichtung mit Enteisungsfunktion nach dem Oberbegriff des Patentanspruches 1.

Aus dem Stand der Technik sind Wärmepumpen bekannt, die zum Beispiel als Heizungsanlagen für Gebäude und Fahrzeuge zum Einsatz kommen. Die Grundidee der Funktionsweise einer Wärmepumpe ist, ein thermodynamisches Gesetz zur Wärmegewinnung zu nutzen, das einen Zusammenhang zwischen dem Druck und der Temperatur beschreibt. Wird beispielsweise der Druck auf eine Flüssigkeit erhöht steigt deren Temperatur an. Umgekehrt kühlt eine Flüssigkeit durch das Absenken des Drucks ab.

Hauptbestandteile einer Wärmepumpe sind ein Verdampfer zur Aufnahme von Wärme, ein Kondensator zur Abgabe von Wärme, ein Expansionsventil als Drossel zur Expansion eines Kältemittels und ein Kompressor mit einem Rücklauf und einem Zulauf zum Verdichten des Kältemittels. Diese sind im Stand der Technik derart in einem Leitungskreislauf für das Kältemittel angeordnet, dass sich der Kondensator zwischen dem Rücklauf und der Drossel befindet sowie der Verdampfer zwischen Vorlauf und Drossel positioniert ist. Eine solche Anordnung ist dazu geeignet, das Kältemittel zwischen dem Rücklauf und der Drossel und somit im Kondensator mit dem Kompressor zu komprimieren und gleichzeitig einen Unterdruck auf das Kältemittel zwischen dem Zulauf und der Drossel und somit im Verdampfer auszuüben. Durch den Druckunterschied ist die Temperatur des Kältemittels im Kondensator deutlich höher als im Verdampfer. Der Verdampfer wird dabei von einem Medium umströmt, das im Stand der Technik regelmäßig Außenluft oder Wasser ist.

Die Wärmegewinnung wird nunmehr dadurch erreicht, dass die Temperatur des Kältemittels im Verdampfer niedriger ist als die des umströmenden Mediums, sodass Wärme vom Medium auf das Kältemittel übertragen wird. Auf diese Weise kann selbst bei sehr niedrigen Temperaturen, zum Beispiel um 0°C, noch Wärme vom Medium auf das Kältemittel übertragen werden, sofern das Kältemittel im Verdampfer kühler ist als 0°C.

Der Drossel kommt dabei die Aufgabe zu, das Kältemittel von einer komprimierten Druckseite hin zu einer Unterdruckseite zu expandieren, um so gemeinsam mit dem Kompressor das Druck- und somit das Temperaturgefälle im Leitungskreislauf zu erzeugen und gleichzeitig eine Bewegung des Kältemittels durch den Leitungskreislauf zu ermöglichen. Das im Verdampfer erwärmte Kältemittel kann nunmehr über den Kompressor hin zu dem Kondensator gelangen. Aufgrund des hier vorliegenden hohen Drucks liegt die Temperatur des Kältemittels deutlich über der Temperatur, die nach der Wärmeaufnahme im Verdampfer vorliegt. Insbesondere ist die Temperatur höher als die einer Kondensatorgegenseite, für welche die gewonnene Wärme bestimmt ist. Das Kältemittel hat dann im Kondensator beispielsweise eine Temperatur von 65°C, während die Temperatur einer Vorlaufleitung eines angeschlossenen Wärmeverbrauchers als Kondensatorgegenseite eine Temperatur von 23°C aufweist. Dementsprechend gibt das Kältemittel im Kondensator Wärme an die Kondensatorgegenseite ab, um anschließend abgekühlt über die Drossel zurück zum Verdampfer zu strömen.

Problematisch ist, dass es aufgrund der niedrigen Temperatur des Kältemittels im Verdampfer zu einer Bildung einer Eisschicht aus Wasser auf dem Verdampfer kommt. Eine derartige Vereisung tritt unter anderem bei Luftwärmepumpen auf, wenn die Lufttemperatur unter circa 7 °C liegt. Luftfeuchtigkeit kondensiert dann am Verdampfer und friert bei Verdampfertemperaturen direkt am Verdampfer an, wodurch die Eisschicht entsteht.

Durch die mit zunehmender Zeit wachsende Eisschichtdicke verringert sich die Wärmeübertragungsfähigkeit des Verdampfers bei gleicher eingesetzter Leistung für den Betrieb der Wärmepumpe, insbesondere des Kompressors. Dadurch sinkt die Leistungszahl (COP = Coefficient of Performance) der Wärmepumpe, die sich aus dem Verhältnis von der Wärme, die im Kondensator abgegeben wird, zu der eingesetzten Leistung für den Betrieb der Wärmepumpe, insbesondere des Kompressors, ergibt. Mithin kann eine derartige Wärmepumpe nicht dauerhaft betrieben werden, denn eine solche Eisschicht muss periodisch entfernt werden. Je nach Temperatur und Feuchtigkeit der Luft kann dies bereits innerhalb von einer Stunde erforderlich sein.

Aus dem Stand der Technik ist bekannt, dass zur Abtauung der Eisschicht aufgewärmtes Kältemittel durch den Verdampfer geleitet wird. Hierfür sind entweder ein separater Wärmeerzeuger oder ein Kältemittelspeicher sowie Ventile und Leitungen notwendig, die einen kleinen Kreislauf mit dem Verdampfer bilden. Diese müssen zudem über eine Regeleinheit angesteuert werden.

Nachteilig ist, dass der Kompressor während einer Abtauphase außer Betrieb ist und der Kondensator keine Wärme abgibt. In der Regel dauert eine Abtauphase etwa zehn Minuten. Wärmepumpen mit einem derartigen Zeitraum ohne Heizleistung können eventuell die Anforderungen einer Beheizung mit erhöhtem Komfortanspruch nicht vollständig erfüllen. So kühlt beispielsweise ein Fahrzeug bei niedriger Außentemperatur und Fahrtwind sehr stark innerhalb einer Abtauphase aus.

Die Abtauung ist auch mit einem zusätzlichen Leistungsaufwand verbunden. Weiterhin sind die jährlichen Betriebsstunden, in denen eine Wärmeabgabe am Kondensator an die Kondensatorgegenseite erfolgt, niedrig. Diese Betriebsstunden werden als Jahresarbeitszahl bezeichnet. Hierdurch sinkt letztlich auch eine über das Jahr gemittelte Jahres-Leistungszahl, die sich aus dem Verhältnis aus der in einem Jahr vom Kondensator abgegebenen Wärme und der in diesem Jahr aufgewendeten Leistung zum Betrieb der Wärmepumpe ergibt.

Weiterhin sind aus dem Stand der Technik Wärmepumpenvorrichtungen mit einem Verdampfer, einem Kondensator, einem Kältemittel, einer Drossel, welche derart ausgestaltet ist, dass das Kältemittel in beiden Richtungen expandieren kann, einem Kompressor und einem 4-Wege-Ventil bekannt.

Mit diesen Hauptbestandteilen, kann die Wärmepumpeneinrichtung einen Abtauprozess durch eine Umkehrung des Prozesses durchführen. Hierfür wird die Flussrichtung des Kältemittels im Kältemittelkreislauf umgekehrt. Der Kompressor muss dabei auch in umgekehrter Flussrichtung funktionstüchtig sein. Kompressoren des Standes der Technik können jedoch nur in einer Durchflussrichtung betrieben werden. Dies macht es erforderlich, das 4-Wege-Ventil im Zulauf und im Rücklauf des Kompressors anzuordnen. Durch einen Wechsel der Ventilstellung kann die Flussrichtung nunmehr im Verdampfer, der Drossel und dem Kondensator umgekehrt werden. Auf diese Weise liegt der Kondensator auf der Unterdruckseite und nimmt Wärme von der Kondensatorgegenseite auf. Gleichzeitig liegt der Verdampfer auf der Druckseite. Das durchströmende Kältemittel gibt dabei Wärme ab, die einen Abtauprozess bewirkt.

Dabei wird keine Wärme durch den Kondensator abgeben, sondern sogar Wärme von der Kondensatorgegenseite entzogen; zum Beispiel auch aus einem dort eingebundenen Pufferspeicher für das Heizmedium. Wärmepumpeneinrichtungen mit einem derartigen kühlenden Intervall haben den Nachteil, dass sie die Anforderungen bei einer Beheizung mit erhöhtem Komfortanspruch nicht erfüllen können. Weiterhin sind auch die Jahresarbeitszahl und die Jahres-Leistungszahl geringer, da in den Abtauphasen keine Wärme gewonnen werden kann.

Ausgehend vom Stand der Technik ist es Aufgabe der Erfindung die bestehenden Nachteile des Standes der Technik zu beseitigen. Insbesondere sollen die Jahresarbeitszahl und die Jahres-Leistungszahl der Wärmepumpeneinrichtung erhöht, sowie eine Vorrichtung bereitgestellt werden, die erhöhten Komfortansprüchen gerecht wird. Die Lösung soll dabei kostengünstig, zuverlässig und einfach handhabbar sein.

Erfindungsgemäß wird dies mit den Merkmalen des Patentanspruches 1 gelöst. Vorteilhafte Weiterbildungen sind den Unteransprüchen zu entnehmen.

Die Erfindung betrifft eine Wärmepumpeneinrichtung mit einem ersten Verdampfer, einem Kondensator, einem Kältemittel, einer Drossel, die derart ausgestaltet ist, dass das Kältemittel in beiden Flussrichtungen expandieren kann, einem Kompressor, dessen Rücklauf und Zulauf mit einem ersten 4-Wege-Ventil verbunden sind. Dabei ist die Drossel über Leitungen mit dem ersten 4-Wege-Ventil und dem ersten Verdampfer verbunden, und der erste Verdampfer ist wenigstens über eine Leitung mit dem ersten 4-Wege-Ventil verbunden. Weiterhin ist dabei der Kondensator zwischen dem Kompressor und dem ersten 4-Wege-Ventil im Rücklauf angeordnet, und ein zweiter Verdampfer befindet sich derart zwischen der Drossel und dem ersten 4-Wege-Ventil, dass die Drossel zwischen dem ersten Verdampfer und dem zweiten Verdampfer positioniert ist.

Die erfindungsgemäße Wärmepumpeneinrichtung ermöglicht, dass im Betrieb je nach Stellung des ersten 4-Wege-Ventils entweder der erste Verdampfer oder der zweite Verdampfer abtaut. Der Kondensator liegt jeweils im Rücklauf des Kompressors und gibt in jeder Stellung des ersten 4-Wege-Ventils Wärme ab. Um dies zu erreichen, ermöglicht eine Schaltstellung des 4-Wege-Ventils eine Bewegung des Kältemittels im Leitungskreislauf von dem Kompressor abgehenden Rücklauf über den Kondensator zum ersten 4-Wege-Ventil und von diesem über den zweiten Verdampfer zur Drossel. Dies hat zur Folge, dass sich der Kondensator und der zweite Verdampfer auf der Druckseite befinden und das darin befindliche Kältemittel Wärme abgibt, wobei der zweite Verdampfer abtaut. Von der Drossel strömt das Kältemittel anschließend über den ersten Verdampfer zum ersten 4-Wege-Ventil und von diesem zum Kompressor zugehenden Zulauf. Der erste Verdampfer liegt somit auf der Unterdruckseite und das darin befindliche Kältemittel nimmt Wärme aus dem umströmenden Medium auf.

Eine zweite Schaltstellung des 4-Wege-Ventils ermöglicht hingegen eine Bewegung des Kältemittels im Leitungskreislauf von dem Kompressor abgehenden Rücklauf über den Kondensator zum ersten 4-Wege-Ventil und von diesem über den ersten Verdampfer zur Drossel. Dies hat zur Folge, dass sich der Kondensator und der erste Verdampfer auf der Druckseite befinden und darin befindliches Kältemittel Wärme abgibt, wobei der erste Verdampfer abtaut. Von der Drossel strömt das Kältemittel über den zweiten Verdampfer zum ersten 4-Wege-Ventil und von diesem zum Kompressor zugehenden Zulauf. Der zweite Verdampfer liegt somit auf der Unterdruckseite und überträgt Wärme von dem umströmenden Medium auf das durchströmende Kältemittel. Somit wird der Kondensatorgegenseite durch den Kondensator in beiden Schaltstellungen keine Wärme zum Abtauen entzogen, sondern erfindungsgemäß immer Wärme durch den Kondensator abgegeben. Die Vorrichtung kann hierdurch auch bei hohen Anforderungen an den Heizkomfort eingesetzt werden.

Zusätzlich steigen die Jahresarbeitszahl und die Jahres-Leistungszahl stark an, da der Kondensator stets Wärme abgibt und für den Abtauprozess nahezu keine Zusatzleistung aufgewendet wird. Ferner werden keine zusätzlichen Ventile, Leitungen und Heizeinrichtungen für den Abtauprozess benötigt, wodurch die Erfindung sogar zu einer kostengünstigen Gestaltung der Wärmepumpeneinrichtung führt. Die Kosten für den zweiten Verdampfer, werden durch die höhere Jahres-Leistungszahl deutlich kompensiert. Eine einfache Handhabbarkeit und hohe Zuverlässigkeit der Wärmepumpeneinrichtung sind ebenfalls gegeben.

Besonders interessant ist die Erfindung neben der Verwendung für ein stationäres Heizsystem auch bei einem Einsatz in einem Elektrofahrzeug. In Elektrofahrzeugen fehlt als Wärmequelle der Verbrennungsmotor. Daher muss auf andere Wärmequellen, wie zum Beispiel eine Luft-Wärmepumpe, zurückgegriffen werden. Mit der Erfindung kann kontinuierlich, ohne Unterbrechung geheizt werden. Der Komfort für den Nutzer verbessert sich erheblich. Die hohe Jahres-Leistungszahl der erfindungsgemäßen Lösung erhöht letztlich auch die Reichweite von Elektrofahrzeugen, da keine Zusatzaggregate für die Wärmeerzeugung vorgesehen werden müssen.

Eine Ausführungsform der Erfindung sieht vor, dass die Drossel aus einer Parallelschaltung von einem vorwärts angeordneten ersten Expansionsventil und einem rückwärts angeordneten zweiten Expansionsventil besteht. Hierdurch kann gewährleistet werden, dass die Drossel in beiden Durchflussrichtungen gleichsam gut das Kältemittel expandiert. Dabei ist das erste Expansionsventil in einer Durchflussrichtung in einer expandierenden Funktionsstellung und das zweite Expansionsventil geschlossen, sowie das zweite Expansionsventil in entgegengesetzter Durchflussrichtung in der expandierenden Funktionsstellung und das erste Expansionsventil geschlossen.

Erfindungsgemäß kann auch vorgesehen sein, dass die Drossel derart ausgestaltet ist, dass sie in wenigstens einer Funktionsstellung einen Strömungswiderstand aufweist, der kleiner oder gleich groß wie der Strömungswiderstand der Leitungen ist. Somit stellt die Drossel keinen Strömungswiderstand für das Kältemittel dar, der zu einem Druckgefälle und somit einem druckbedingten Temperaturunterschied führt. Dies ermöglicht, dass der Kondensator Wärme aufnimmt und beide Verdampfer gleichzeitig abgetaut werden können. Weiterhin eröffnet eine derartige Ausgestaltung die Möglichkeit weiterer Varianten der Erfindung.

Dies kann auch dadurch erreicht werden, dass in einer Parallelschaltung zur Drossel ein öffenbarer Bypass vorhanden ist, dessen Strömungswiderstand kleiner oder gleich groß wie der Strömungswiderstand der Leitungen ist. Ein derartiger Bypass ermöglicht, standardisierte Expansionsventile zu verwenden, die deutlich günstiger sind als aufwendige Spezialkonstruktionen. Außerdem müssen keine Kompromisse dahingehend eingegangen werden, dass Abstriche in der Qualität der expandierenden Funktionsstellung gemacht werden müssen.

Besondere Vorteile ergeben sich, wenn zwischen dem ersten 4-Wege-Ventil und dem ersten Verdampfer eine erste Zusatzdrossel angeordnet ist. Bei expandierender Funktionsstellung der ersten Zusatzdrossel und vollständig geöffneter Funktionsstellung der Drossel oder des zugehörigen Bypasses wird der Druckwechsel zwischen der Unterdruckseite und der Druckseite von der Drossel auf die erste Zusatzdrossel verlegt. Eine Schaltstellung des ersten 4-Wege-Ventils ermöglicht nunmehr, dass der erste Verdampfer und der zweite Verdampfer auf der Druckseite liegen und somit beide abtauen.

Besonders vorteilhaft ist, dass in einer zweiten Schaltstellung des ersten 4-Wege-Ventils der erste Verdampfer und der zweite Verdampfer auf der Unterdruckseite liegen und beide Wärme aus dem umströmenden Medium aufnehmen. Da ein Verdampfer in der Regel eine längere Zeit benötigt um eine Eisschicht zu bilden als um abzutauen, kann während der Zeit, in der beide Verdampfer frei von einer Eisschicht und somit einsatzbereit sind, in beiden Verdampfern Wärme von einem umströmenden Medium auf ein durchströmendes Kältemittel übertragen werden.

Die Abtauphasen sind vorzugsweise so zu legen, dass stets wenigstens ein Verdampfer Wärme aus der Luft aufnimmt. Hierdurch werden die Jahres-Leistungszahl und die Jahresarbeitszahl pro Verdampfer der Wärmepumpeneinrichtung stark erhöht. Für die gleiche Wärmeabgabe an die Kondensatorgegenseite ist nunmehr ein geringerer Leistungseinsatz zum Betrieb der Wärmepumpeneinrichtung notwendig, was zu geringeren Kosten führt und im Falle eines Fahrzeugs die Reichweite erhöht. Die Kosten für die zusätzliche Drossel werden durch die höhere Jahres-Leistungszahl deutlich kompensiert. Ferner sind auch eine einfache Handhabung und eine hohe Zuverlässigkeit gegeben.

Vorteilhaft ist auch, dass durch eine Prozessführung, bei der beide Verdampfer Wärme aufnehmen, die Möglichkeit besteht, unterschiedliche Medien zur Wärmegewinnung zu nutzen, wie zum Beispiel Luft und Erdwärme durch Sole. Vorzugsweise wird dabei der Verdampfer des Mediums zuerst vom Kältemittel durchströmt, dessen Mediums-Temperatur niedriger ist. Dadurch ist sichergestellt, dass keine Wärme verloren geht, weil das zweite Medium das Kältemittel stärker erwärmen kann. Wäre die Durchflussrichtung umgekehrt, könnte es sogar sein, dass das Kältemittel in einem Verdampfer durch das erste Medium erwärmt und durch das zweite Medium im anderen Verdampfer wieder abgekühlt wird. Die Abtauprozesse können auch bei unterschiedlichen Medien optimal ausgelegt werden.

Ferner sieht eine Variante der Erfindung vor, dass die erste Zusatzdrossel derart ausgestaltet ist, dass sie in wenigstens einer Funktionsstellung einen Strömungswiderstand aufweist, der kleiner oder gleich groß wie der Strömungswiderstand der Leitungen ist. Dies kann erfindungsgemäß auch dadurch erreicht werden, dass in einer Parallelschaltung zur ersten Zusatzdrossel ein öffenbarer Bypass vorhanden ist, dessen Strömungswiderstand kleiner oder gleich groß wie der Strömungswiderstand der Leitungen ist. Hierdurch wird ermöglicht, dass bei geöffneter erster Zusatzdrossel und in expandierender Funktionsstellung der Drossel, die Drossel die Druckgrenze zwischen der Unterdruckseite und der Druckseite ist. Ein Verdampfer liegt somit auf einer Druckseite und einer auf der Unterdruckseite, so dass sich die vorstehend beschriebenen Vorteile ergeben.

Gemäß der Erfindung kann die erste Zusatzdrossel aus einer Parallelschaltung von einem vorwärts angeordneten ersten Expansionsventil und einem rückwärts angeordneten zweiten Expansionsventil bestehen. Dies gewährleistet, dass die Zusatzdrossel in beiden Durchflussrichtungen das Kältemittel expandiert. Dabei ist das erste Expansionsventil in einer ersten Schaltstellung des 4-Wege-Ventils in einer expandierenden Funktionsstellung und das zweite Expansionsventil geschlossen, sowie das zweite Expansionsventil in einer zweiten Schaltstellung des 4-Wege-Ventils in der expandierenden Funktionsstellung und das erste Expansionsventil geschlossen.

Vorteile ergeben sich erfindungsgemäß auch, wenn zwischen dem ersten 4-Wege-Ventil und dem zweiten Verdampfer eine zweite Zusatzdrossel angeordnet ist. Bei expandierender Funktionsstellung der zweiten Zusatzdrossel und ganz geöffneter Funktionsstellung der Drossel oder des Bypasses wird die Druckgrenze zwischen der Unterdruckseite und der Druckseite von der Drossel auf die zweite Zusatzdrossel verlegt.

Eine Schaltstellung des ersten 4-Wege-Ventils ermöglicht nunmehr, dass sowohl der erste Verdampfer, als auch der zweite Verdampfer auf der Druckseite liegen und beide abtauen. Besonders vorteilhaft ist wiederum, dass in einer zweiten Schaltstellung des ersten 4-Wege-Ventils der erste Verdampfer und der zweite Verdampfer auf der Unterdruckseite liegen und beide Wärme aufnehmen. Da ein Verdampfer in der Regel eine längere Zeit benötigt um eine Eisschicht zu bilden als um abzutauen, kann während der Zeit in der beide Verdampfer frei von einer Eisschicht und somit einsatzbereit sind, von beiden Verdampfern Wärme von einem umströmenden Medium auf durchströmendes Kältemittel übertragen werden.

Die Abtauphasen sind vorzugsweise so zu legen, dass stets wenigstens ein Verdampfer Wärme aus der Luft aufnimmt. Hierdurch werden die Jahres-Leistungszahl und die Jahresarbeitszahl pro Verdampfer der Wärmepumpeneinrichtung stark erhöht. Für die gleiche Wärmeabgabe an die Kondensatorgegenseite ist nunmehr ein geringerer Leistungseinsatz notwendig, was zu geringeren Kosten führt und im Falle eines Fahrzeugs die Reichweite erhöht. Die Kosten für die zusätzliche Drossel werden durch die höhere Jahresleistungszahl deutlich kompensiert. Ferner sind auch eine einfache Handhabung und eine hohe Zuverlässigkeit gegeben.

Vorteilhaft ist auch, dass durch eine Prozessführung bei der beide Verdampfer Wärme aufnehmen die Möglichkeit besteht, unterschiedliche Medien zur Wärmegewinnung zu nutzen, wie zum Beispiel Luft und Erdwärme durch Sole. Vorzugsweise wird dabei der Verdampfer des Mediums zuerst durchströmt, dessen Temperatur niedriger ist. Dies stellt sicher, dass keine Wärme verloren geht, weil das zweite Medium das Kältemittel stärker erwärmen kann. Wäre die Durchflussrichtung umgekehrt, könnte es sogar sein, dass das Kältemittel in einem Verdampfer durch das erste Medium erwärmt und durch das zweite Medium im anderen Verdampfer wieder abgekühlt wird. Die Abtauprozesse können auch bei unterschiedlichen Medien optimal ausgelegt werden.

Erfindungsgemäß ist von Vorteil, wenn die zweite Zusatzdrossel derart ausgestaltet ist, dass sie in wenigstens einer Funktionsstellung einen Strömungswiderstand aufweist, der kleiner oder gleich groß wie der Strömungswiderstand der Leitungen ist. Dies kann auch durch eine Ausgestaltung erreicht werden, bei der in einer Parallelschaltung zur zweiten Zusatzdrossel ein öffenbarer Bypass vorhanden ist, dessen Strömungswiderstand kleiner oder gleich groß wie der Strömungswiderstand der Leitungen ist. Hierdurch wird ermöglicht, dass bei geöffneter zweiter Zusatzdrossel und in expandierender Funktionsstellung der Drossel, die Drossel selbst die Druckgrenze zwischen der Unterdruckseite und der Druckseite ist. Ein Verdampfer liegt somit auf der Druckseite und der andere auf der Unterdruckseite, wodurch sich die oben beschriebenen Vorteile ergeben.

In einer Variante der Erfindung besteht die zweite Zusatzdrossel aus einer Parallelschaltung von einem vorwärts angeordneten ersten Expansionsventil und einem rückwärts angeordneten zweiten Expansionsventil. Somit ist gewährleistet, dass die zweite Zusatzdrossel in beiden Durchflussrichtungen gleichsam gut das Kältemittel expandiert. Dabei ist das erste Expansionsventil in einer ersten Schaltstellung des 4-Wege-Ventils in einer expandierenden Funktionsstellung und das zweite Expansionsventil geschlossen, sowie das zweite Expansionsventil in einer zweiten Schaltstellung des 4-Wege-Ventils in der expandierenden Funktionsstellung und das erste Expansionsventil geschlossen.

Es ist auch möglich, neben der Drossel eine erste und eine zweite Zusatzdrossel vorzusehen. Dabei sollte sich vorzugsweise immer nur eine der Drosseln in einer expandierenden Funktionsstellung befinden und die anderen beiden geöffnet sein, ggf. durch einen Bypass. Dadurch lässt sich die Druckgrenze an drei Positionen im Kältemittelkreislauf legen, so dass sich kein Verdampfer, ein Verdampfer oder beide Verdampfer auf der Unterdruckseite befinden und Wärme aufnehmen. Es lässt sich somit zwischen einer Vielzahl von Schaltstellungen wählen, um die Abtauphasen optimal zu gestalten und die Jahresarbeitszahl sowie die Jahres-Leistungszahl der Wärmepumpeneinrichtung zu maximieren.

Besondere Vorteile der Erfindung ergeben sich, wenn ein zweites 4-Wege-Ventil im Rücklauf zwischen dem Kompressor und dem Kondensator sowie im Zulauf angeordnet ist. Durch eine derartige Anordnung ist es möglich, den Kondensator auf der Unterdruckseite zu betreiben und eine Abtauung eines oder beider Verdampfer durch eine Prozessumkehr zu ermöglichen. Hierbei entzieht der Kondensator der Kondensatorgegenseite Wärme, die dann zum Abtauen der Verdampfer genutzt wird.

In den meisten Anwendungsfällen der Wärmepumpeneinrichtung ist eine derartige Abtauung zwar nicht erforderlich, aber bestimmte klimatische Bedingungen können dazu führen, dass beide Verdampfer innerhalb sehr kurzer Zeit vereisen, zum Beispiel durch bestimmte Witterungsverhältnisse, bei einer Wasserdurchfahrt mit einem Fahrzeug oder durch Spritzwasser. In einem solchen Fall kann dann durch die Prozessumkehr die Wärmepumpeneinrichtung schnellstmöglich wieder in einen heizenden Betrieb schalten. Die Jahresarbeitszahl und die Jahres-Leistungszahl werden unter derartigen Bedingungen deutlich erhöht. Von bedeutendem Vorteil ist dabei zusätzlich, dass durch die Prozessumkehr mit dem System nicht nur geheizt, sondern auch gekühlt werden kann. Mithin ist die Wärmepumpeneinrichtung als Heizung und als Klimaanlage nutzbar. Die Installation einer zusätzlichen Klimaanlage ist somit entbehrlich. Hierdurch sinken die Kosten, der Installationsaufwand und das Gesamtgewicht. Dies ist von besonderer Bedeutung für Fahrzeuge aller Art, da das Fahrzeuggewicht niedriger ausfällt und der ohnehin knappe Bauraum nicht über Gebühr in Anspruch genommen wird.

Erfindungsgemäß kann vorgesehen sein, dass eine Regeleinrichtung mit dem ersten 4-Wege-Ventil verbunden ist. Diese übernimmt die Steuerung des ersten 4-Wege-Ventils derart, dass in regelmäßigen zeitlichen Abständen von einer Schaltstellung in eine andere Schaltstellung gewechselt wird.

Weiterhin könnte die Regeleinrichtung derart gestaltet werden, dass sie die Verdampferleistung misst. Bei einer Unterschreitung der in Abhängigkeit von der Lufttemperatur, Luftfeuchtigkeit und Luftdruck des Luftstroms theoretisch möglichen Verdampferleistung um ein bestimmtes Kriterium schaltet die Regeleinrichtung das erste 4-Wege-Ventil um. Sofern beide Verdampfer den Grenzwert unterschreiten, könnte eine Prozessumkehr-Abtauung durch Umschaltung des zweiten 4-Wege-Ventils durch die Regeleinrichtung erfolgen.

Vorteilhaft ist auch eine Messung der Vereisung durch die Regeleinrichtung am ersten Verdampfer und am zweiten Verdampfer, wobei die Regeleinrichtung das erste 4-Wege-Ventil in eine Schaltstellung schaltet, in welcher der stärker vereiste Verdampfer auf der Druckseite liegt. Es ergeben sich ebenfalls Vorteile wenn die Drossel und die Zusatzdrosseln, sowie zugehörige Bypässe von der Regeleinrichtung derart verstellt werden, dass die Leistungszahl der Wärmepumpeneinrichtung maximiert wird.

Zur möglichst kompakten Gestaltung der Wärmepumpeneinrichtung können die beschriebenen Leitungen auch durch eine direkte Verbindung zwischen nebeneinander liegenden Kältemittelkreislaufbestandteilen ausgebildet sein. So ist es beispielsweise möglich, die Drossel direkt am ersten Verdampfer anzuflanschen. Die beschriebenen Leitungen sind somit nicht ausschließlich physisch vorhandene Leitungen, sondern auch Kältemittel leitende Verbindungen.

Die Zeichnungen stellen Ausführungsbeispiele der Erfindung dar und zeigen in

Fig. 1    Eine erfindungsgemäße Wärmepumpeneinrichtung,

Fig. 2    eine erfindungsgemäße Wärmepumpeneinrichtung mit umgekehrter Durchflussrichtung,

Fig. 3    eine erfindungsgemäße Wärmepumpeneinrichtung mit zwei Zusatzdrosseln und einem zweiten 4-Wege-Ventil,

Fig. 4    eine erfindungsgemäße Wärmepumpeneinrichtung mit zwei Zusatzdrosseln und einem zweiten 4-Wege-Ventil, wobei der Kondensator auf der Unterdruckseite liegt,

Fig. 5a    ein Druck-Enthalpie-Diagramm einer erfindungsgemäßen Wärmepumpeneinrichtung und

Fig. 5b    ein Druck-Enthalpie-Diagramm einer Wärmepumpeneinrichtung des Standes der Technik.

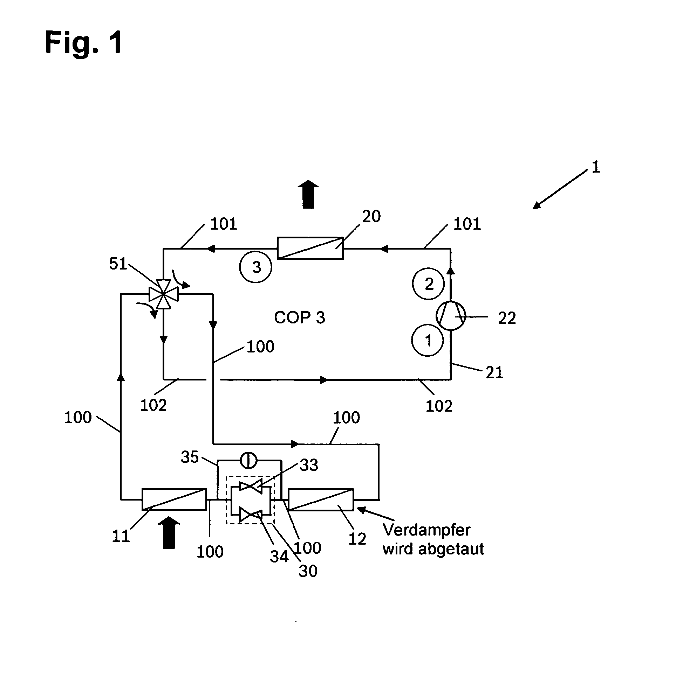

**Figur 1** zeigt eine Wärmepumpeneinrichtung 1 mit einem ersten Verdampfer 11, einem Kondensator 20, einem Kältemittel 21, einer Drossel 30, einem Kompressor 22, dessen Rücklauf 101 und Zulauf 102 mit einem ersten 4-Wege-Ventil 51 verbunden sind. Weiterhin ist die Drossel 30 über Leitungen 100 mit dem ersten Verdampfer 11 und einem zweiten Verdampfer 12 verbunden, wobei der erste Verdampfer 11 über eine Leitung 100 mit dem ersten 4-Wege-Ventil 51 und der zweite Verdampfer 12 ebenfalls über eine Leitung 100 mit dem ersten 4-Wege-Ventil 51 verbunden ist. Dabei ist der Kondensator 20 zwischen dem Kompressor 22 und dem ersten 4-Wege-Ventil 51 im Rücklauf 101 angeordnet.

Die Drossel 30 besteht aus einer Parallelschaltung von einem vorwärts angeordneten ersten Expansionsventil 33 und einem rückwärts angeordneten zweiten Expansionsventil 34. Dabei ist in der gezeigten Schaltstellung des 4-Wegeventils 51 das erste Expansionsventil 33 geschlossen und das zweite Expansionsventil 34 expandierend.

Zusätzlich ist in einer Parallelschaltung zur Drossel 30 ein öffenbarer Bypass 35 in geschlossener Schaltstellung vorhanden, dessen Strömungswiderstand in geöffneter Schaltstellung kleiner oder gleich groß wie der Strömungswiderstand der Leitungen 100 ist.

In der gezeigten Schaltstellung des ersten 4-Wege-Ventils 51 strömt das Kältemittel 21 auf der Seite des Rücklaufs 101 und somit einer Druckseite des Kompressors 22 über den Kondensator 20 zum ersten 4-Wege-Ventil 51 und von diesem über den zweiten Verdampfer 12 zur Drossel 30. Dabei gibt das Kältemittel 21 sowohl im Kondensator 20 als auch im zweiten Verdampfer 12 Wärme ab. Eis auf dem zweiten Verdampfer 12 kann somit abtauen. Vom zweiten Verdampfer 12 strömt das Kältemittel 21 über die expandierende Drossel 30, insbesondere das expandierende zweite Expansionsventil 34, über den ersten Verdampfer 11 zum 4-Wege-Ventil 51. Dabei liegt der erste Verdampfer 11 auf einer Unterdruckseite und das durchströmende Kältemittel 21 nimmt Wärme von einem den ersten Verdampfer 11 umströmenden Medium auf. Anschließend bewegt sich das Kältemittel 21 vom ersten 4-Wege-Ventil 51 über den Zulauf 102 zurück zum Kompressor 22.

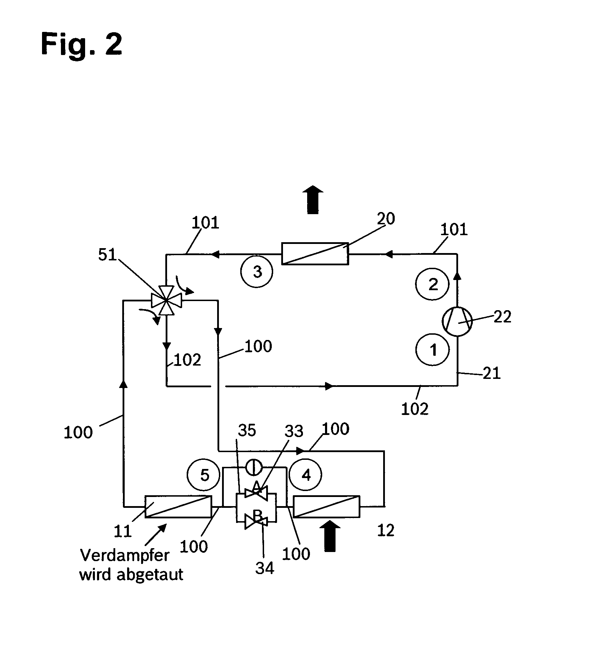

**Figur 2** zeigt eine Wärmepumpeneinrichtung 1 mit einem umgekehrten Kältemitteldurchfluss, mit einem ersten Verdampfer 11, einem Kondensator 20, einem Kältemittel 21, einer Drossel 30, einem Kompressor 22, dessen Rücklauf 101 und Zulauf 102 mit einem ersten 4-Wege-Ventil 51 verbunden sind. Weiterhin ist die Drossel 30 über Leitungen 100 mit dem ersten Verdampfer 11 und dem zweiten Verdampfer 12 verbunden, wobei der erste Verdampfer 11 über eine Leitung 100 mit dem ersten 4-Wege-Ventil 51 und der zweite Verdampfer 12 ebenfalls über eine Leitung 100 mit dem ersten 4-Wege-Ventil 51 verbunden ist. Dabei ist der Kondensator 20 zwischen dem Kompressor 22 und dem ersten 4-Wege-Ventil 51 im Rücklauf 101 angeordnet.

In der gezeigten Schaltstellung des ersten 4-Wege-Ventils 51 strömt das Kältemittel 21 auf der Seite des Rücklaufs 101 und somit einer Druckseite des Kompressors 22 über den Kondensator 20 zum ersten 4-Wege-Ventil 51 und von diesem über den ersten Verdampfer 11 zur Drossel 30. Dabei gibt das Kältemittel 21 sowohl im Kondensator 20 als auch im ersten Verdampfer 11 Wärme ab. Eis auf dem ersten Verdampfer 11 kann somit abtauen. Vom ersten Verdampfer 11 strömt das Kältemittel 21 anschließend durch die expandierende Drossel 30 über den zweiten Verdampfer 12 zum 4-Wege-Ventil 51. Dabei liegt der zweite Verdampfer 12 auf einer Unterdruckseite und das durchströmende Kältemittel 21 nimmt Wärme aus einem den zweiten Verdampfer 12 umströmenden Medium auf. Anschließend bewegt sich das Kältemittel 21 vom ersten 4-Wege-Ventil 51 über den Zulauf 102 zurück zum Kompressor 22.

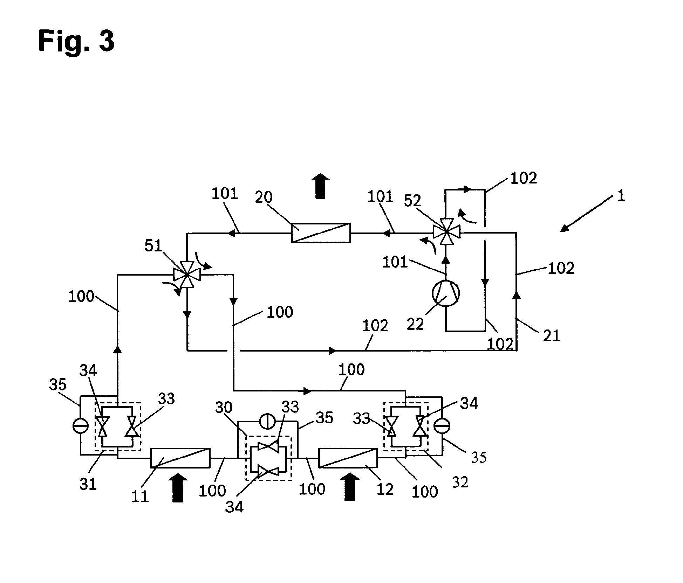

In **Figur 3** ist eine erfindungsgemäße Wärmepumpeneinrichtung 1 mit zwei Zusatzdrosseln 31, 32 und einem zweiten 4-Wege-Ventil 52 dargestellt. Insbesondere zeigt sie eine Wärmepumpeneinrichtung 1 mit einem ersten Verdampfer 11, einem Kondensator 20, einem Kältemittel 21, einer Drossel 30, einem Kompressor 22, dessen Rücklauf 101 und Zulauf 102 mit einem ersten 4-Wege-Ventil 51 verbunden sind. Dabei ist im Rücklauf 101 und im Zulauf 102 das zweite 4-Wege-Ventil 52 derart angeordnet, dass der Kondensator 20 zwischen dem ersten 4-Wege-Ventil 51 und dem zweiten 4-Wege-Ventil 52 im Rücklauf 101 angeordnet ist.

Weiterhin ist die Drossel 30 über Leitungen 100 mit dem ersten Verdampfer 11 und dem zweiten Verdampfer 12 verbunden, wobei der erste Verdampfer 11 über eine Leitung 100 mit einer ersten Zusatzdrossel 31 und diese mit dem ersten 4-Wege-Ventil 51 verbunden ist. Der zweite Verdampfer 12 ist über eine Leitung 100 mit einer zweiten Zusatzdrossel 32 verbunden, welche über eine Leitung 100 ebenfalls mit dem ersten 4-Wege-Ventil 51 verbunden ist.

Die Drossel 30, die erste Zusatzdrossel 31 und die zweite Zusatzdrossel 32 bestehen jeweils aus einer Parallelschaltung von einem vorwärts angeordneten ersten Expansionsventil 33 und einem rückwärts angeordneten zweiten Expansionsventil 34. Zusätzlich ist in einer Parallelschaltung zur Drossel 30, der ersten Zusatzdrossel 31 und zur zweiten Zusatzdrossel 32 jeweils ein öffenbarer Bypass 35 vorhanden, dessen Strömungswiderstand in geöffneter Schaltstellung kleiner oder gleich groß wie der Strömungswiderstand der Leitungen 100 ist.

In der gezeigten Schaltstellung des ersten 4-Wege-Ventils 51 und zweiten 4-Wege-Ventils 52 strömt das Kältemittel 21 auf der Seite des Rücklaufs 101 und somit auf einer Druckseite des Kompressors 22 über das zweite 4-Wege-Ventil 52 und den Kondensator 20 zum ersten 4-Wege-Ventil 51. Von diesem strömt es über die zweite Zusatzdrossel 32, den zweiten Verdampfer 12, die Drossel 30, den ersten Verdampfer 11 und die erste Zusatzdrossel 31 zurück zum ersten 4-Wege-Ventil 51, um von diesem über den Zulauf 102 und das zweite 4-Wege-Ventil 52 zurück zum Kompressor 22 zu gelangen.

Es sind nunmehr verschiedene Schaltstellungen der Drossel 10, der ersten Zusatzdrossel 31 und der zweiten Zusatzdrossel 32 möglich. In einer ersten Schaltstellungsvariante sind sowohl die Bypässe 35 der Drossel 10 als auch der ersten Zusatzdrossel 31 und der zweiten Zusatzdrossel 32 geöffnet. Dies führt dazu, dass der Kondensator Wärme aufnimmt und der erste Verdampfer 11 und der zweite Verdampfer 12 Wärme abgeben. Beide Verdampfer 11, 12 tauen somit ab.

In einer zweiten Schaltstellungsvariante sind sowohl die Bypässe 35 der Drossel 10 als auch der ersten Zusatzdrossel 31 geöffnet und der Bypass 35 der zweiten Zusatzdrossel 32 geschlossen. Das zweite Expansionsventil 34 der zweiten Zusatzdrossel 32 befindet sich nunmehr in einer expandierenden Funktionsstellung und das erste Expansionsventil 33 der zweiten Zusatzdrossel 32 ist geschlossen. Dies führt dazu, dass der Kondensator 20 auf einer Druckseite liegt und das durchströmende Kältemittel 21 Wärme abgibt, sowie der erste Verdampfer 11 und der zweite Verdampfer 12 auf einer Unterdruckseite liegen und das durchströmende Kältemittel 21 Wärme aus einem den ersten Verdampfer 11 umströmenden Medium und einem den zweiten Verdampfer 12 umströmenden Medium aufnimmt.

In einer dritten Schaltstellungsvariante sind sowohl die Bypässe 35 der ersten Zusatzdrossel 11 als auch der zweiten Zusatzdrossel 32 geöffnet und der Bypass 35 der Drossel 30 geschlossen. Das zweite Expansionsventil 34 der Drossel 30 befindet sich nunmehr in einer expandierenden Funktionsstellung und das erste Expansionsventil 33 der Drossel 30 ist geschlossen. Dies führt dazu, dass der Kondensator 20 und der zweite Verdampfer 12 auf einer Druckseite liegen und das durchströmende Kältemittel 21 Wärme abgibt, sowie der erste Verdampfer 11 auf einer Unterdruckseite liegt und das durchströmende Kältemittel 21 Wärme aus einem den ersten Verdampfer 11 umströmenden Medium aufnimmt. Der zweite Verdampfer 12 taut somit ab.

In einer vierten Schaltstellungsvariante sind sowohl die Bypässe 35 der Drossel 10 als auch der zweiten Zusatzdrossel 32 geöffnet und der Bypass 35 der ersten Zusatzdrossel 30 geschlossen. Das zweite Expansionsventil 34 der zweiten Zusatzdrossel 32 befindet sich nunmehr in einer expandierenden Funktionsstellung und das erste Expansionsventil 33 der zweiten Zusatzdrossel 32 ist geschlossen. Dies führt dazu, dass der Kondensator 20, der erste Verdampfer 11 und der zweite Verdampfer 12 auf einer Druckseite liegen und Wärme abgeben. Der erste Verdampfer 11 und der zweite Verdampfer 12 tauen somit ab. Allerdings wird dem Kältemittelkreislauf keine Wärme mehr von außen zugeführt, abgesehen von der Wärmeentwicklung des Kompressors 22.

Nicht gezeigt ist eine Schaltstellung des ersten 4-Wege-Ventils 51 bei der das Kältemittel zuerst durch die erste Zusatzdrossel 31, dann über den ersten Verdampfer 11, die Drossel 30, den zweiten Verdampfer 12 und über die zweite Zusatzdrossel 32 zurück zum ersten 4-Wege-Ventil 51 strömt. Hierbei können wiederum unterschiedliche Schaltstellungen der Drossel 30, der ersten Zusatzdrossel 31 und der zweiten Zusatzdrossel 32 vorgenommen werden, so dass entweder das Kältemittel 21 in beiden Verdampfern 11,12 Wärme abgibt, wodurch die beiden Verdampfer 11,12 abtauen, oder das Kältemittel 21 in beiden Verdampfern 11,12 Wärme aufnimmt, oder das Kältemittel 21 im ersten Verdampfer 11 Wärme abgibt, wodurch der erste Verdampfer 11 abtaut, sowie das Kältemittel 21 im zweiten Verdampfer 12 Wärme aufnimmt.

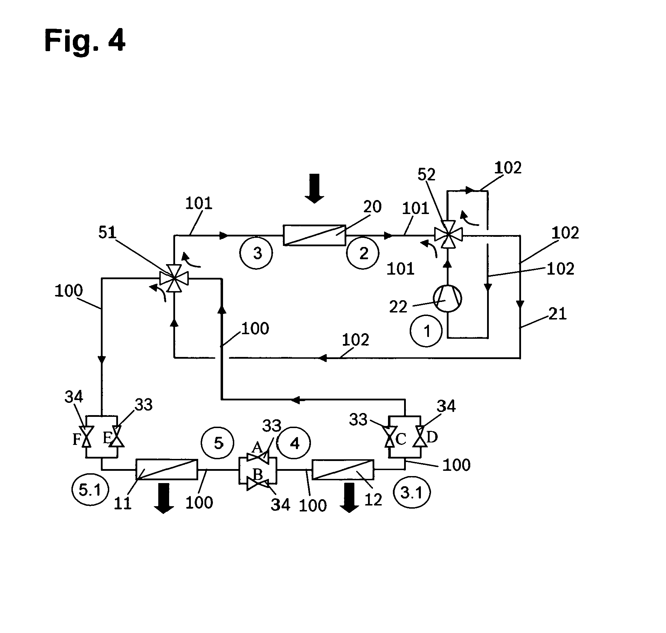

**Figur 4** zeigt eine erfindungsgemäße Wärmepumpeneinrichtung 1 mit zwei Zusatzdrosseln 31,32 und einem zweiten 4-Wege-Ventil 52, wobei das zweite 4 Wege-Ventil 52 derart geschaltet ist, dass der Kondensator 20 auf einer Unterdruckseite liegt. Insbesondere zeigt Figur 4 eine Wärmepumpeneinrichtung 1 mit einem ersten Verdampfer 11, einem zweiten Verdampfer 12, dem Kondensator 20, einem Kältemittel 21, einer Drossel 30, einem Kompressor 22, dessen Rücklauf 101 und Zulauf 102 mit einem ersten 4-Wege-Ventil 51 verbunden sind. Dabei ist im Rücklauf 101 und im Zulauf 102 das zweite 4-Wege-Ventil 52 derart angeordnet, dass der Kondensator 20 zwischen dem ersten 4-Wege-Ventil 51 und dem zweiten 4 Wege-Ventil 52 im Rücklauf 101 angeordnet ist. Weiterhin ist die Drossel 30 über Leitungen 100 mit dem ersten Verdampfer 11 und dem zweiten Verdampfer 12 verbunden, wobei der erste Verdampfer 11 über eine Leitung 100 mit einer ersten Zusatzdrossel 31 und diese mit dem ersten 4-Wege-Ventil 51 verbunden ist. Der zweite Verdampfer 12 ist über eine Leitung 100 mit einer zweiten Zusatzdrossel 32 verbunden, welche über eine Leitung 100 wiederum mit dem ersten 4-Wege-Ventil 51 verbunden ist.

In der gezeigten Schaltstellung des ersten 4-Wege-Ventils 51 und zweiten 4-Wege-Ventils 52 strömt das Kältemittel 21 auf der Seite des Rücklaufs 101 und somit auf einer Druckseite des Kompressors 22 über das zweite 4-Wege-Ventil 52 über den Zulauf 102 zum ersten 4-Wege-Ventil 51. Von diesem strömt es über die erste Zusatzdrossel 31, den ersten Verdampfer 11, die Drossel 30, den zweiten Verdampfer 12 und die zweite Zusatzdrossel 32 zurück zum ersten 4-Wege-Ventil 51, um von diesem über den Rücklauf 101, den Kondensator 20 und das zweite 4-Wege-Ventil 52 und den Zulauf 102 zurück zum Kompressor 22 zu gelangen.

Es sind nunmehr verschiedene Schaltstellungen der Drossel 10, der ersten Zusatzdrossel 31 und der zweiten Zusatzdrossel 32 möglich. In einer ersten Schaltstellungsvariante sind sowohl die Bypässe 35 der Drossel 10 als auch der ersten Zusatzdrossel 31 und der zweiten Zusatzdrossel 32 geöffnet. Dies führt dazu, dass den Kondensator 20 durchströmendes Kältemittel 21 Wärme aufnimmt und den ersten Verdampfer 11 und den zweiten Verdampfer 12 durchströmendes Kältemittel 21 Wärme abgibt. Beide Verdampfer 11, 12 tauen somit ab. In einer zweiten Schaltstellungsvariante sind sowohl die Drossel 10 als auch die erste Zusatzdrossel 31 geöffnet und die zweite Zusatzdrossel 32 expandierend. Dies führt dazu, dass der Kondensator 20 auf einer Unterdruckseite liegt und durchströmendes Kältemittel 21 dort Wärme aufnimmt. Der erste Verdampfer 11 und der zweite Verdampfer 12 liegen hingegen auf einer Druckseite und dort durchströmendes Kältemittel 21 gibt jeweils Wärme ab. Auf diese Weise ist sowohl eine gleichzeitige Abtauung der beiden Verdampfer 11,12 möglich, als auch ein Klimaanlagenbetrieb der Wärmepumpeneinrichtung 1, bei dem eine Kondensatorgegenseite abgekühlt wird. In einer dritten Schaltstellungsvariante sind sowohl die erste Zusatzdrossel 11 als auch die zweiten Zusatzdrossel 32 geöffnet und die Drossel 30 expandierend. Dies führt dazu, dass der erste Verdampfer 11 auf einer Druckseite liegt und ihn durchströmendes Kältemittel 21 Wärme abgibt, sowie der Kondensator 20 und der zweite Verdampfer 11 auf einer Unterdruckseite liegen und sie durchströmendes Kältemittel 21 Wärme aufnimmt. Der erste Verdampfer 11 taut somit ab. In einer vierten Schaltstellungsvariante sind sowohl die Drossel 10 als auch die zweite Zusatzdrossel 32 geöffnet und die erste Zusatzdrossel 30 expandierend. Dies führt dazu, dass der erste Verdampfer 11, der zweite Verdampfer 12 und der Kondensator 20 auf einer Unterdruckseite liegen und Wärme aufnehmen.

Nicht gezeigt ist eine Schaltstellung des ersten 4-Wege-Ventils 51 bei der das Kältemittel zuerst durch die zweite Zusatzdrossel 32, dann über den zweiten Verdampfer 12, die Drossel 30, den ersten Verdampfer 11 und über die erste Zusatzdrossel 31 zurück zum ersten 4-Wege-Ventil 51 strömt. Hierbei können wiederum unterschiedliche Schaltstellungen der Drossel 30, der ersten Zusatzdrossel 31 und der zweiten Zusatzdrossel 32 vorgenommen werden, so dass entweder Kältemittel 21 in beiden Verdampfern 11,12 Wärme abgibt, wodurch die Verdampfer 11,12 abtauen, oder Kältemittel 21 in beiden Verdampfern 11,12 Wärme aufnimmt, oder den ersten Verdampfer 11 durchströmendes Kältemittel 21 Wärme abgibt, wodurch der erste Verdampfer abtaut sowie den zweiten Verdampfer 12 durchströmendes Kältemittel 21 Wärme aufnimmt.

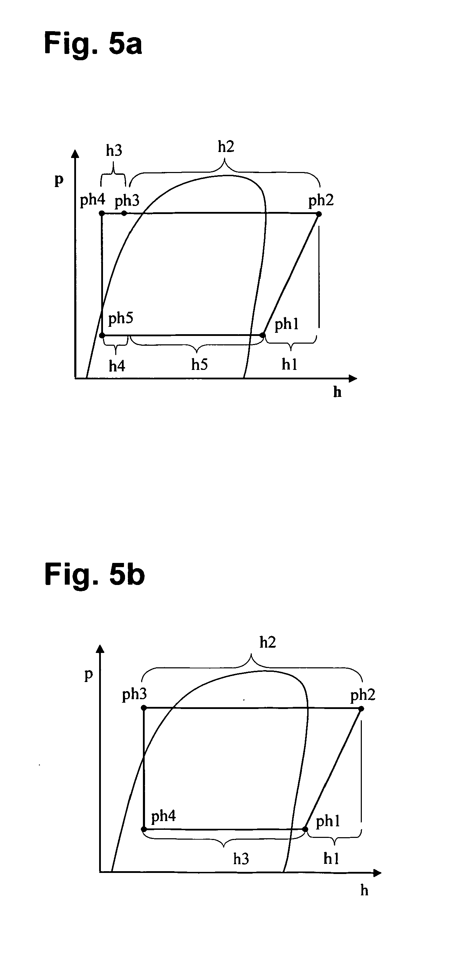

**Figur 5a** zeigt ein Druck-Enthalpie-Diagramm einer erfindungsgemäßen Wärmepumpeneinrichtung. Auf einer Abszisse ist eine Enthalpie h und auf einer Ordinate ein Druck p eingetragen. ph1 stellt einen Ausgangspunkt dar, in dem ein Kältemittel auf einer Unterdruckseite über einen Zulauf einen zugehörigen Kompressor erreicht. Der Kompressor verdichtet das Kältemittel bis ph2, so dass ein höherer Druck vorliegt. Dabei wird dem Kältemittel die Enthalpie h1 zugeführt und dessen Temperatur steigt an.

Ab dem Punkt ph2 ist das Kältemittel nunmehr auf einer Druckseite. Die Verbindungslinie von ph2 nach ph3 stellt eine Abkühlung des Kältemittels auf der Druckseite in einem Kondensator dar, bei der das Kältemittel die Enthalpie h2 abgibt. Weiterhin gibt das Kältemittel auf der Druckseite in einem zweiten Verdampfer eine Enthalpie h3 ab, die in dem Diagramm zwischen dem Punkt ph3 und einem Punkt ph4 ablesbar ist. Dies entspricht einer Wärmeabgabe, die zu einer Abtauung des zweiten Verdampfers genutzt wird. In Punkt ph4 wird das Kältemittel in einer Drossel bis zu einem Punkt ph5 entspannt. Zwischen ph5 und ph1 wird das Kältemittel schließlich auf einer Unterdruckseite in einem ersten Verdampfer durch eine Zuführung einer Enthalpie h5 erwärmt, indem einem den Verdampfer umströmenden Medium Wärme entzogen wird, die das Kältemittel aufnimmt.

Zur Gewinnung der Enthalpie h4 ist lediglich eine leicht vergrößerte Verdampferfläche im Vergleich zum Stand der Technik notwendig. Dahingegen fallen keine weiteren Leistungsaufwendungen an, um die erfindungsgemäße Wärmepumpeneinrichtung zu betreiben, insbesondere ist keine Erhöhung der Enthalpie h1 durch den Kompressor notwendig. Auch die Heizleistung am Kondensator in Form von Enthalpie h2 ist nicht verringert im Vergleich zum Stand der Technik. Hierdurch wird eine deutliche Verbesserung der Jahres-Leistungszahl der Wärmepumpeneinrichtung erreicht. Eine momentane Leistungszahl lässt sich durch die Division von der Enthalpie h2 durch die Enthalpie h1 berechnen. Die Jahres-Leistungszahl ergibt sich aus:

$$Jahres - Leistungszahl = \frac{h_2(T_{heiz})}{h_1(T_{heiz})}$$

Wobei $T_{heiz}$ die Zeit ist, in der Wärme vom Kondensator abgegeben wird.

In Figur 5b ist ein Druck-Enthalpie-Diagramm einer Wärmepumpeneinrichtung des Standes der Technik dargestellt. Auf einer Abszisse ist eine Enthalpie h und auf einer Ordinate ein Druck p abgebildet. ph1 stellt einen Ausgangspunkt dar, in dem ein Kältemittel auf einer Unterdruckseite über einen Zulauf einen zugehörigen Kompressor erreicht. Der Kompressor verdichtet das Kältemittel bis ph2, so dass ein höherer Druck vorliegt. Dabei wird dem Kältemittel die Enthalpie h1 zugeführt und die Temperatur des Kältemittels steigt an.

Ab einem Punkt ph2 ist das Kältemittel nunmehr auf einer Druckseite. Die Verbindungslinie von ph2 zu einem Punkt ph3 stellt eine Abkühlung des Kältemittels auf der Druckseite in einem Kondensator dar, bei der das Kältemittel eine Enthalpie h2 abgibt. In ph3 wird das Kältemittel in einer Drossel bis zu einem Punkt ph4 entspannt. Zwischen ph4 und ph1 wird das Kältemittel schließlich auf einer Unterdruckseite in einem Verdampfer erwärmt, indem einem den Verdampfer umströmenden Medium Wärme entzogen wird, die das Kältemittel aufnimmt. Eine momentane Leistungszahl lässt sich durch die Division von der Enthalpie h2 durch die Enthalpie h1 berechnen. Eine Berechnung einer Jahres-Leistungszahl muss berücksichtigen, dass in Fig. 5b keine Abtauphasen gezeigt sind, welche die Jahres-Leistungszahl deutlich verringern. Insbesondere ergibt sie sich bei einem Umkehrprozess aus:

$$Jahres - Leistungszahl = \frac{h_2(T_{heiz}) - h_2(T_{tau})}{h_1(T_{heiz}) + h_1(T_{tau})}$$

Wobei $T_{heiz}$ die Zeit ist, in der Wärme vom Kondensator abgegeben wird und $T_{tau}$ die Zeit der Abtauphasen ist. Wie in der Formel erkennbar, reduziert sowohl die aufzuwendende Enthalpie zum Abtauen $h_2(T_{tau})$ im Zähler die Jahres-Leistungszahl, als auch die für die Abtauphasen aufzuwendende Leistung $h_1(T_{tau})$ im Zähler.

Bezugszeichen

11    Wärmepumpeneinrichtung

11    erster Verdampfer

12    zweiter Verdampfer

20    Kondensator

21   Kältemittel

22   Kompressor

30   Drossel

31   erste Zusatzdrossel

32   zweite Zusatzdrossel

33   erstes Expansionsventil

34   zweites Expansionsventil

35   Bypass

51   erstes 4-Wege-Ventil

52   zweites 4-Wege-Ventil

100   Leitung

101   Rücklauf

102   Zulauf

**Patentansprüche**

1.  Wärmepumpeneinrichtung (1) mit einem ersten Verdampfer (11), einem Kondensator (20), einem Kältemittel (21), einer Drossel (30), die derart ausgestaltet ist, dass das Kältemittel (21) in beiden Flussrichtungen expandieren kann, einem Kompressor (22), dessen Rücklauf (101) und Zulauf (102) mit einem ersten 4-Wege-Ventil (51) verbunden sind, wobei die Drossel (30) über Leitungen (100) mit dem ersten 4-Wege-Ventil (51) und dem ersten Verdampfer (11) verbunden ist, und wobei der erste Verdampfer (11) wenigstens über eine Leitung (100) mit dem ersten 4-Wege-Ventil (51) verbunden ist,
    **dadurch gekennzeichnet, dass** der Kondensator (20) zwischen dem Kompressor (22) und dem ersten 4-Wege-Ventil (51) im Rücklauf (101) angeordnet ist, und ein zweiter Verdampfer (12) derart zwischen der Drossel (30) und dem ersten 4-Wege-Ventil (51) angeordnet ist, dass die Drossel (30) zwischen dem ersten Verdampfer (11) und dem zweiten Verdampfer (12) positioniert ist.

2.  Wärmepumpeneinrichtung (1) nach Anspruch 1,
    **dadurch gekennzeichnet, dass** die Drossel (30) aus einer Parallelschaltung von einem vorwärts angeordneten ersten Expansionsventil (33) und einem rückwärts angeordneten zweiten Expansionsventil (34) besteht.

3.  Wärmepumpeneinrichtung (1) nach einem der Ansprüche 1 oder 2,
    **dadurch gekennzeichnet, dass** die Drossel (30) derart ausgestaltet ist, dass sie in wenigstens einer Funktionsstellung einen Strömungswiderstand aufweist, der kleiner oder gleich groß wie der Strömungswiderstand der Leitungen (100) ist.

4.  Wärmepumpeneinrichtung (1) nach einem der vorhergehenden Ansprüche,
    **dadurch gekennzeichnet, dass** in einer Parallelschaltung zur Drossel (30) ein öffenbarer Bypass (35) vorhanden ist, dessen Strömungswiderstand kleiner oder gleich groß wie der Strömungswiderstand der Leitungen (100) ist.

5.  Wärmepumpeneinrichtung (1) nach einem der vorhergehenden Ansprüche,
    **dadurch gekennzeichnet, dass** zwischen dem ersten 4-Wege-Ventil (51) und dem ersten Verdampfer (11) eine erste Zusatzdrossel (31) angeordnet ist.

6.  Wärmepumpeneinrichtung (1) nach Anspruch 5,

**dadurch gekennzeichnet, dass** die erste Zusatzdrossel (31) derart ausgestaltet ist, dass sie in wenigstens einer Funktionsstellung einen Strömungswiderstand aufweist, der kleiner oder gleich groß wie der Strömungswiderstand der Leitungen (100) ist.

7. Wärmepumpeneinrichtung (1) nach einem der Ansprüche 5 oder 6,
**dadurch gekennzeichnet, dass** in einer Parallelschaltung zur ersten Zusatzdrossel (31) ein öffenbarer Bypass (35) vorhanden ist, dessen Strömungswiderstand kleiner oder gleich groß wie der Strömungswiderstand der Leitungen (100) ist.

8. Wärmepumpeneinrichtung (1) nach einem der Ansprüche 5 bis 7,
**dadurch gekennzeichnet, dass** die erste Zusatzdrossel (31) aus einer Parallelschaltung von einem vorwärts angeordneten ersten Expansionsventil (33) und einem rückwärts angeordneten zweiten Expansionsventil (34) besteht.

9. Wärmepumpeneinrichtung (1) nach einem der vorhergehenden Ansprüche,
**dadurch gekennzeichnet, dass** zwischen dem ersten 4-Wege-Ventil (51) und dem zweiten Verdampfer (12) eine zweite Zusatzdrossel (32) angeordnet ist.

10. Wärmepumpeneinrichtung (1) nach Anspruch 9,
**dadurch gekennzeichnet, dass** die zweite Zusatzdrossel (32) derart ausgestaltet ist, dass sie in wenigstens einer Funktionsstellung einen Strömungswiderstand aufweist, der kleiner oder gleich groß wie der Strömungswiderstand der Leitungen (100) ist.

11. Wärmepumpeneinrichtung (1) nach einem der Ansprüche 9 oder 10,
**dadurch gekennzeichnet, dass** in einer Parallelschaltung zur zweiten Zusatzdrossel (32) ein öffenbarer Bypass (35) vorhanden ist, dessen Strömungswiderstand kleiner oder gleich groß wie der Strömungswiderstand der Leitungen (100) ist.

12. Wärmepumpeneinrichtung (1) nach einem der Ansprüche 9 bis 11,
**dadurch gekennzeichnet, dass** die zweite Zusatzdrossel (32) aus einer Parallelschaltung von einem vorwärts angeordneten ersten Expansionsventil (33) und einem rückwärts angeordneten zweiten Expansionsventil (34) besteht.

13. Wärmepumpeneinrichtung (1) nach einem der vorhergehenden Ansprüche,
**dadurch gekennzeichnet, dass** ein zweites 4-Wege-Ventil (52) im Rücklauf (101) zwischen dem Kompressor (22) und dem Kondensator (20) sowie im Zulauf (102) angeordnet ist.

**Geänderte Patentansprüche gemäss Regel 137(2) EPÜ.**

1. Wärmepumpeneinrichtung (1) mit einem ersten Verdampfer (11), einem Kondensator (20), einem Kältemittel (21), einer Drossel (30), die derart ausgestaltet ist, dass das Kältemittel (21) in beiden Flussrichtungen expandieren kann, einem Kompressor (22), dessen Rücklauf (101) und Zulauf (102) mit einem ersten 4-Wege-Ventil (51) verbunden sind, wobei die Drossel (30) über Leitungen (100) mit dem ersten 4-Wege-Ventil (51) und dem ersten Verdampfer (11) verbunden ist, und wobei der erste Verdampfer (11) wenigstens über eine Leitung (100) mit dem ersten 4-Wege-Ventil (51) verbunden ist,
**dadurch gekennzeichnet, dass** der Kondensator (20) zwischen dem Kompressor (22) und dem ersten 4-Wege-Ventil (51) im Rücklauf (101) angeordnet ist, und ein zweiter Verdampfer (12) derart zwischen der Drossel (30) und dem ersten 4-Wege-Ventil (51) angeordnet ist, dass die Drossel (30) zwischen dem ersten Verdampfer (11) und dem zweiten Verdampfer (12) positioniert ist.

2. Wärmepumpeneinrichtung (1) nach Anspruch 1,
**dadurch gekennzeichnet, dass** die Drossel (30) aus einer Parallelschaltung von einem vorwärts angeordneten ersten Expansionsventil (33) und einem rückwärts angeordneten zweiten Expansionsventil (34) besteht.

3. Wärmepumpeneinrichtung (1) nach einem der Ansprüche 1 oder 2,
**dadurch gekennzeichnet, dass** in einer Parallelschaltung zur Drossel (30) ein öffenbarer Bypass (35) vorhanden ist.

**4.** Wärmepumpeneinrichtung (1) nach einem der vorhergehenden Ansprüche,
**dadurch gekennzeichnet, dass** zwischen dem ersten 4-Wege-Ventil (51) und dem ersten Verdampfer (11) eine erste Zusatzdrossel (31) angeordnet ist.

**5.** Wärmepumpeneinrichtung (1) nach Anspruch 4,
**dadurch gekennzeichnet, dass** in einer Parallelschaltung zur ersten Zusatzdrossel (31) ein öffenbarer Bypass (35) vorhanden ist.

**6.** Wärmepumpeneinrichtung (1) nach einem der Ansprüche 4 oder 5,
**dadurch gekennzeichnet, dass** die erste Zusatzdrossel (31) aus einer Parallelschaltung von einem vorwärts angeordneten ersten Expansionsventil (33) und einem rückwärts angeordneten zweiten Expansionsventil (34) besteht.

**7.** Wärmepumpeneinrichtung (1) nach einem der vorhergehenden Ansprüche,
**dadurch gekennzeichnet, dass** zwischen dem ersten 4-Wege-Ventil (51) und dem zweiten Verdampfer (12) eine zweite Zusatzdrossel (32) angeordnet ist.

**8.** Wärmepumpeneinrichtung (1) nach Anspruch 7,
**dadurch gekennzeichnet, dass** in einer Parallelschaltung zur zweiten Zusatzdrossel (32) ein öffenbarer Bypass (35) vorhanden ist.

**9.** Wärmepumpeneinrichtung (1) nach einem der Ansprüche 7 oder 8,
**dadurch gekennzeichnet, dass** die zweite Zusatzdrossel (32) aus einer Parallelschaltung von einem vorwärts angeordneten ersten Expansionsventil (33) und einem rückwärts angeordneten zweiten Expansionsventil (34) besteht.

**10.** Wärmepumpeneinrichtung (1) nach einem der vorhergehenden Ansprüche,
**dadurch gekennzeichnet, dass** ein zweites 4-Wege-Ventil (52) im Rücklauf (101) zwischen dem Kompressor (22) und dem Kondensator (20) sowie im Zulauf (102) angeordnet ist.

# Fig. 1

# Fig. 2

Verdampfer
wird abgetaut

# Fig. 3

# Fig. 4

# Fig. 5a

# Fig. 5b

| | Europäisches Patentamt European Patent Office Office européen des brevets | **EUROPÄISCHER RECHERCHENBERICHT** | **Nummer der Anmeldung** EP 11 18 6865 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A | EP 1 059 181 A2 (MITSUBISHI HEAVY IND LTD [JP]; GEN MOTORS CORP [US]) 13. Dezember 2000 (2000-12-13) * Absätze [0051], [0052], [0058]; Abbildung 1 * ----- | 1-13 | INV. B60H1/00 F25B30/02 F25B47/02 |
| A | DE 20 2006 010412 U1 (KROLL MARKUS [DE]; VETTER ANDREAS [DE]) 14. September 2006 (2006-09-14) * Absätze [0020], [0034]; Abbildung 3 * ----- | 1-13 | |
| A | EP 0 128 108 A2 (CARRIER CORP [US]) 12. Dezember 1984 (1984-12-12) * Seite 11, Zeile 31 - Seite 13, Zeile 25; Abbildungen 3,4 * ----- | 1-13 | |

RECHERCHIERTE SACHGEBIETE (IPC)

B60H
F25B

Der vorliegende Recherchenbericht wurde für alle Patentansprüche erstellt

| Recherchenort | Abschlußdatum der Recherche | Prüfer |
|---|---|---|
| München | 30. Januar 2012 | Gumbel, Andreas |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............................................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 11 18 6865

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-01-2012

| Im Recherchenbericht angeführtes Patentdokument | Datum der Veröffentlichung | Mitglied(er) der Patentfamilie | Datum der Veröffentlichung |
|---|---|---|---|
| EP 1059181 A2 | 13-12-2000 | CN 1277926 A | 27-12-2000 |
| | | CN 1491820 A | 28-04-2004 |
| | | CN 1491821 A | 28-04-2004 |
| | | DE 60016835 D1 | 27-01-2005 |
| | | DE 60016835 T2 | 01-12-2005 |
| | | EP 1059181 A2 | 13-12-2000 |
| | | JP 4310027 B2 | 05-08-2009 |
| | | JP 2001010334 A | 16-01-2001 |
| | | JP 2009154868 A | 16-07-2009 |
| | | KR 20010007279 A | 26-01-2001 |
| | | US 6237357 B1 | 29-05-2001 |
| DE 202006010412 U1 | 14-09-2006 | DE 202006010412 U1 | 14-09-2006 |
| | | EP 1876402 A2 | 09-01-2008 |
| | | EP 2119985 A2 | 18-11-2009 |
| EP 0128108 A2 | 12-12-1984 | DE 3464796 D1 | 20-08-1987 |
| | | EP 0128108 A2 | 12-12-1984 |
| | | JP 60017662 A | 29-01-1985 |
| | | US 4565070 A | 21-01-1986 |

EPO FORM P0461

Für nähere Einzelheiten zu diesem Anhang : siehe Amtsblatt des Europäischen Patentamts, Nr.12/82